# DEMANDE DE BREVET EUROPEEN

(11) **EP 2 639 197 A1**
(43) Date de publication de la demande: **18.09.2013**
(21) Numéro de dépôt: 12159053.3
(22) Date de dépôt: 12.03.2012
(51) Int. Cl.: B67C 3/04, B65D 1/02, B29C 71/02

(54) **Procédé de traitement thermique d'un contenant destiné à être empli à chaud, pour stockage longue durée, contenant obtenu**

(71) Demandeur: Sogepi, 2520 Luxembourg (LU)
(72) Inventeur: Vogel, Gustave, L-33221 Bettembourg (LU)
(74) Mandataire: Kohn, Philippe

(57) **Abrégé**

L'objet de l'invention est un procédé de traitement thermique d'un contenant destiné à être empli à chaud, pour un stockage long, caractérisé en ce qu'il comprend les étapes suivantes :
- Réalisation d'un contenant (10) à paroi mince à partir d'une préforme, par un procédé engendrant des contraintes résiduelles, ledit contenant étant destiné à recevoir des moyens d'obturation (20),
- Réalisation dans ce contenant d'une zone (12) de déformation,
- Emplir le contenant (10) à chaud, à une température supérieure à 70°C, avec un produit agroalimentaire,
- Fermer ledit contenant empli,
- Effectuer un apport d'énergie sur la zone (12) de déformation du contenant encore chaud, pour provoquer une libération des contraintes,
- Cesser cet apport d'énergie,
- Refroidir le contenant (10).

L'invention couvre également le contenant pour la mise en oeuvre du procédé.

## Description

La présente invention vise à répondre à une demande du marché des contenants, notamment des contenants pour produits alimentaires et plus particulièrement destinés à une longue conservation donc devant subir un traitement adapté contre les organismes pathogènes, en l'occurrence un traitement par la chaleur, le produit alimentaire étant porté à une température supérieure à 70°C.

L'invention vise aussi le contenant obtenu.

Il se trouve comme cela sera expliqué plus en détail dans la description qui va suivre, que les contenants utilisés dans ces processus présentent de nombreux inconvénients que la présente invention se propose de résoudre de façon économique et industrielle.

Aussi, la présente invention propose de faire subir audit contenant un traitement thermique au cours de son remplissage à chaud pour qu'il puisse être stocké, sans déformation,non seulement en sortie de la chaîne de conditionnent mais qu'il reste sans déformation au cours du temps, même après une longue durée de stockage.

La présente invention concerne des contenants constituant des emballages pour des produits alimentaires du type boissons mais aussi du type compositions alimentaires pour enfants, comme des purées ou des compotes.

Il existe des procédés de remplissage en ambiance stérile à froid dits procédés de remplissage aseptique. De tels procédés permettent également de conserver des produits alimentaires sur de longues périodes mais on comprend aussi que ces procédés requièrent des installations lourdes, complexes et coûteuses.

Il faut recourir à des produits chimiques de stérilisation, une expertise des personnels de la chaîne, et le rendement reste faible eu égard à la lenteur du traitement sur chaîne.

Un autre inconvénient important reste celui du contrôle sanitaire car il ne peut être effectué que sur chaîne, de façon statistique, par prélèvement, il n'y a donc aucune garantie totale.

Le seul avantage, non négligeable,du remplissage par stérilisation reste celui d'utiliser des contenants à parois minces, de faible poids et de forme libre puisque ledit contenant ne subit aucune déformation par la chaleur et aucune déformation du fait d'une mise en pression.

Bien sûr, il est possible de prévoir des produits conservateurs ou des adjuvants de conservation mais ceci est impossible dans de nombreux cas, car soit ces adjuvants modifient les qualités organoleptiques des produits alimentaires visés, soit ils sont interdits par la législation.

Dans tous les cas, l'adjonction de produits de conservation confère une mauvaise image de marque pour le produit vis-à-vis des consommateurs, rend plus complexe la réalisation des compositions alimentaires et engendre une complexification de la gestion de ces conservateurs et autres adjuvants.

La présente invention est donc centrée sur le remplissage à chaud de contenants.

Les procédés de remplissage à chaud sont très attractifs pour les industriels car ils garantissent une sécurité sanitaire et sont d'un coût de revient plus faible que l'aseptique.

Par contre les contraintes techniques sont importantes pour les contenants, ce qui oblige lesdits industriels à recourir à des contenants de formes assez standardisées et surtout à des contenants nécessitant beaucoup de matière, ce qui est préjudiciable à cette filière de remplissage à chaud.

Il existe un procédé, notamment décrit dans la demande de brevet européen EP2 200 809, qui permet de conditionner à chaud des produits alimentaires dans des contenants, en l'occurrence des liquides comme des jus de fruits, dans des bouteilles à paroi mince.

Ce brevet décrit un procédé de traitement thermique d'un contenant à paroi mince, permettant de compenser les problèmes posés. En effet, la bouteille est emplie à chaud bien que cette bouteille soit à paroi mince, généralement issue d'une fabrication par extrusion/soufflage d'une préforme, le plus souvent en matériau du type PET (PolyEthylène Téréphtalate).

Selon ce procédé de l'art antérieur, la bouteille est ainsi emplie à chaud et bouchée puis refroidie en sortie de ligne mais elle se présente fortement collapsée au final du fait de plusieurs phénomènes conjugués qui provoquent une dépression forte en interne.

Une telle bouteille n'est pas commercialisable en l'état.

La solution proposée dans ce brevet européen EP 2 200 809 de l'art antérieur, qui conduit à un résultat technique adapté, consiste à faire subir à ladite bouteille, après son refroidissement,donc remplie de liquide lui-même refroidi, un chauffage périphérique sur au moins une partie de ladite bouteille. Le matériau constituant la paroi est conduit, du fait de cet apport de chaleur, à tenter de reprendre sa forme initiale c'est-à-dire celle de la préforme dont il est issu par extrusion/soufflage. Le volume du contenant diminue par relâchement des contraintes et augmente la pression interne de la bouteille, absorbée par le volume de tête qui se comprime.

Dès lors, le vide qui engendre le collapsage de la bouteille est compensé, le volume intérieur de la bouteille est alors mis en surpression mais insuffisamment pour un stockage longue durée.

Ce procédé ne donne pas entièrement satisfaction comme il sera expliqué ci-après en reprenant, pour décrire la présente invention, l'ensemble des étapes d'un processus de remplissage à chaud.

Le but est en effet de diminuer encore le poids de matière utilisée par contenant afin de poursuivre les efforts de consommation limitée, de limiter les besoins en recyclage, de diminuer les coûts mais aussi d'apporter une réponse complète de stockage dans le temps pour les distributeurs tout en préservant les facilités d'utilisation pour les consommateurs.

Le contenant concerné par la présente invention est donc un contenant du type cylindrique avec un poids de 20 g de PET pour un volume utile de 50 cl, ce qui conduit à une épaisseur de 200 µm environ, sensiblement comme ceux utilisés pour le remplissage à froid en ambiance stérile.

Les étapes d'un procédé de remplissage à chaud sont les suivantes :
- Un contenant à paroi mince est empli d'un produit agroalimentaire en l'occurrence d'un liquide, à une température comprise entre 70 et 95°C maximum.
- Le contenant est obturé, généralement au moyen d'un bouchon, après emplissage, de façon à traiter à la chaleur simultanément le bouchon.
- Le contenant voit ses contraintes résiduelles se libérer, le contenant tend à devenir plus petit, ce qui conduit à mettre le volume interne en pression.
- On constate que cet équilibre des pressions bloque le phénomène de rétraction du volume du contenant. On sait aussi que plus la température d'embouteillage est élevée et plus le phénomène de diminution de volume est important.
- Le volume d'air emprisonné en tête de contenant est également porté à la température d'emplissage du liquide par échange après fermeture.
- Lors du refroidissement du contenant et de son contenu, généralement par aspersion d'eau, le liquide se rétracte un peu mais surtout le volume d'air de tête se rétracte de façon importante, ce qui génère du vide et donc une dépression. On note qu'à ce stade, le contenant est figé dimensionnellement et ne peut plus compenser cette dépression. On constate que la mise en pression initiale, limitée par l'équilibre des pressions qui s'était installé, ne compense plus cette dépression de façon suffisante.

Ainsi, selon l'art antérieur, un réchauffement sur au moins une partie de la surface du contenant refroidi et de son contenu permet de compenser cette dépression par une rétraction supplémentaire liée au relâchement des contraintes de nouveau engendré par ce chauffage, mais cette compensation est insuffisante et notamment en vue d'un stockage prolongé.

En effet, il se produit une évolution au cours du temps à l'intérieur de la bouteille et cette évolution conduit les emballages à se collapser de nouveau et à devenir de nouveau moins présentables.

Ainsi, les produits agroalimentaires, notamment les liquides tels que les jus de fruits, sont désaérés lors de l'emplissage. Au cours du temps, les liquides et autres compositions agroalimentaires vont absorber l'oxygène de l'air de l'espace de tête mais également les autres gaz de cet air.

Si l'on prend l'exemple d'une bouteille, le vide supplémentaire créé par cette absorption de l'air au cours du temps produit de nouveau un phénomène de vide et donc un collapsage du contenant.

Pour donner un exemple, le vide complémentaire généré est compris entre 12 et 17 ml pour un contenant de 500 ml, sachant que la contraction du liquide lors du refroidissement a représenté une diminution de volume de 15 à 20 ml.

Il est à noter que la rétraction liée à l'éventuel stockage au froid extérieur ou en réfrigérateur du contenant et de son contenu, avant ouverture, n'est pas inclus dans ces valeurs indiquées et tend à amplifier le phénomène de rétraction et donc de collapse.

Les procédés de l'art antérieur ne permettent pas de générer une mise en pression suffisante pour que, en sortie de la chaîne de remplissage, le contenant commercialisé puisse être présentable de façon durable, au moins sur la durée de consommation prévue.

Le procédé selon la présente invention est maintenant décrit en détail.

Afin d'illustrer cette description et le meilleur mode de réalisation retenu, il est annexé des figures qui montrent :
- Figure 1 : une vue en élévation latérale d'un contenant vide avec son bouchon,
- Figure 2 : une vue du contenant de la figure 1, en phase de remplissage à chaud,
- Figure 3 : une vue du contenant de la figure 2, empli à chaud, en phase d'obturation par le bouchon,
- Figure 4 : une vue du contenant de la figure 3 après bouchage, toujours chaud,
- Figure 5 : une vue du contenant de la figure 4, encore chaud, en cours de traitement selon l'invention,
- Figure 6 : une vue du contenant de la figure 5, immédiatement après arrêt du traitement selon la figure 5,
- Figure 7 : une vue du contenant empli de la figure 6, en cours de refroidissement,
- Figure 8 : une vue du contenant de la figure 7, en stockage et son évolution au cours du temps en trait mixte,
- Figure 9 : une zone de déformation d'un mode de réalisation préférentiel, à rétraction amplifiée, à l'état latent,
- Figure 10 : la zone de déformation de la figure 9, après rétraction et une première déformation,
- Figure 11 : la zone de déformation de la figure 10, après rétraction et inversée sous l'effet de l'augmentation supplémentaire de pression.
- Figure 12 : la zone de déformation de la figure 11, après rétraction et retour en position proche de la position initiale, pour compenser la dépression.

Le contenant 10 retenu pour la présente description est une bouteille destinée à recevoir un contenu liquide tel qu'un jus de fruit.

Le contenant pourrait contenir tout produit alimentaire liquide comme les jus de fruit, les boissons aux fruits, les boissons aromatisées, tout produit agroalimentaire semi-liquide comme les purées de fruits ou de légumes ou pâteux comprenant les compotes, confitures, purées denses par exemple.

Le contenant concerné est réalisé préférentiellement en PET et obtenu par extrusion soufflage dit par bi-orientation, procédé bien connu dans l'industrie. Tout autre matériau équivalent au PET pourrait être utilisé.

Cette bi-orientation permet une organisation des chaînes moléculaires lors du traitement de déformation, organisation qui reste bloquée tant qu'une montée en température reste inférieure à la température de relâchement des contraintes. Cette déformation n'est donc pas stable à la plage envisagée de températures de remplissage à chaud.

Dès que la température est supérieure à cette température de figeage de l'organisation des chaînes moléculaires, le relâchement des contraintes débute et ceci presque proportionnellement à ladite température. Le contenant a donc tendance à reprendre sa forme initiale.

De telles bouteilles sont donc figées pour des températures inférieures à 40°C/50°C.

Ces bouteilles peuvent être de forme quelconque, ne présentent ni des panneaux d'absorption de vide, ni des ceintures comme dans les bouteilles dites "Heat Resistant".

Par contre, la bouteille comprend une zone 12 de déformation préférentielle.

Cette zone 12 de déformation préférentielle est plus particulièrement choisie dans le fond du contenant, notamment dans le mode de réalisation qui est retenu dans le cas présent. Cette zone 12 de déformation pourrait être constituée de plusieurs zones mais pour la bonne compréhension de la présente invention, il est prévu une seule zone.

Cette zone de déformation est dimensionnée tant en distribution de matière qu'en épaisseur de matière, afin de la rendre souple et déformable, comparé au reste du contenant. La zone de déformation doit avoir une surface développée supérieure à celle qui sera obtenu après mise en oeuvre du procédé selon la présente invention.

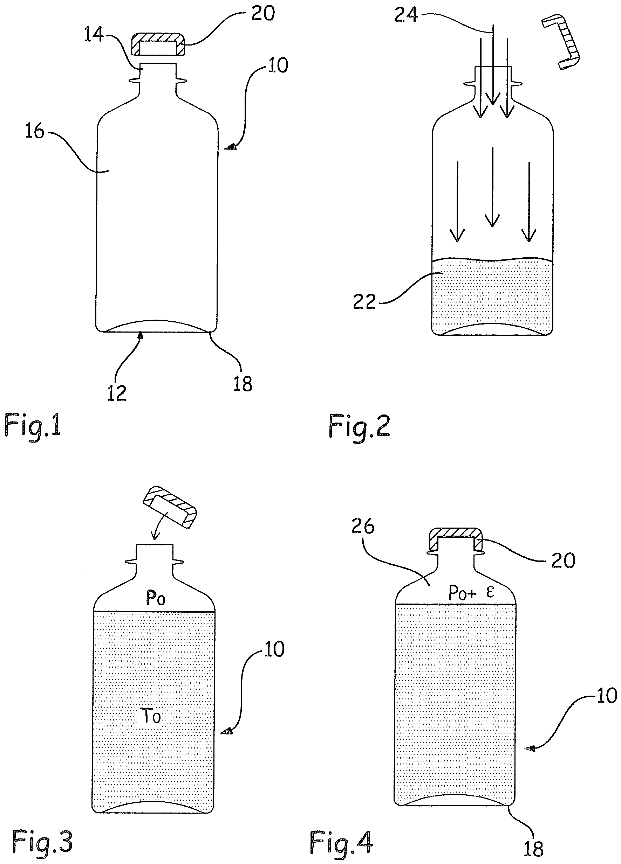

Le procédé selon la présente consiste en la succession des étapes suivantes :
Etape 1 : le contenant 10 comprend un col 14, un corps 16, un fond 18 et des moyens d'obturation 20, en l'occurrence un bouchon, prévu pour venir obturer ledit col. Ce contenant a une forme cylindrique pour simplifier la description mais pourrait prendre n'importe quelle forme. Le fond est bombé, de forme concave, la courbure étant donc orientée vers l'intérieur du contenant. Voir figure 1.
Etape 2 : le produit agroalimentaire 22, en l'occurrence un jus de fruit, est introduit dans le contenant à une température T₀de destruction des organismes pathogènes comprise entre 70 et 95°C, ceci par une tête 24 de remplissage d'une machine de remplissage de type connu. Cette étape est représentée sur la figure 2.
Etape 3 : le remplissage est interrompu à un niveau laissant un espace 26 de tête, rendu nécessaire pour éviter tout débordement, voir figure 3. La durée de remplissage est extrêmement rapide de l'ordre de quelques secondes et même en maîtrisant le déplacement de la canule, il serait difficile de ne pas déborder sans laisser cet espace de tête. Tout débordement est exclu car il conduirait à une dégradation ultérieure des coulures extérieures lors du stockage, générant des traces préjudiciables à la commercialisation.
Etape 4 : le contenant est bouché à l'aide du bouchon 20, après remplissage, ce qui isole le contenu de l'extérieur. De façon préférentielle, le bouchage est réalisé immédiatement après remplissage. Un retournement éventuel de la bouteille permet de traiter thermiquement le bouchon sur sa face intérieure sinon, de toutes les façons, l'air emprisonné dans l'espace de tête monte rapidement en température pour atteindre la température du liquide toujours à la température T₀, ce qui traite aussi thermiquement le bouchon.
La bouteille conserve sa forme initiale. Le volume est V₀ et la pression interne est P₀, c'est-à-dire la pression atmosphérique au moment du remplissage plus une légère augmentation de pression noté ε.En effet sous l'effet de l'augmentation de température par échange avec le liquide chaud, une première rétraction générale du contenant se produit par relâchement des contraintes. La température est T₀, c'est-à-dire la température de remplissage. Ce stade est représenté figure 4.

On peut noter que, si le contenant était laissé ainsi à refroidissement lent, les libérations de contraintes débuteraient, de façon homogène jusqu'à l'équilibre de la pression interne et des forces de rétraction. Cette mise en pression serait totalement insuffisante pour conduire à un contenant stable et non susceptible de se déformer au cours du temps.

De toutes les façons, dans les procédés connus, les bouteilles ainsi traitées sont refroidies après remplissage, ce qui bloque la rétraction du matériau, la température de figeage étant rapidement atteinte.

Etape 5 : après bouchage, selon la présente invention, de l'énergie est apportée au droit de la zone 12 de déformation. Cette énergie est apportée de façon puissante, sur une durée très brève par un flux d'air chaud, par un rayonnement infrarouge, par un contact avec un patin chaud ou tout autre moyen équivalent qui conduit à une transformation de cette énergie en chaleur.

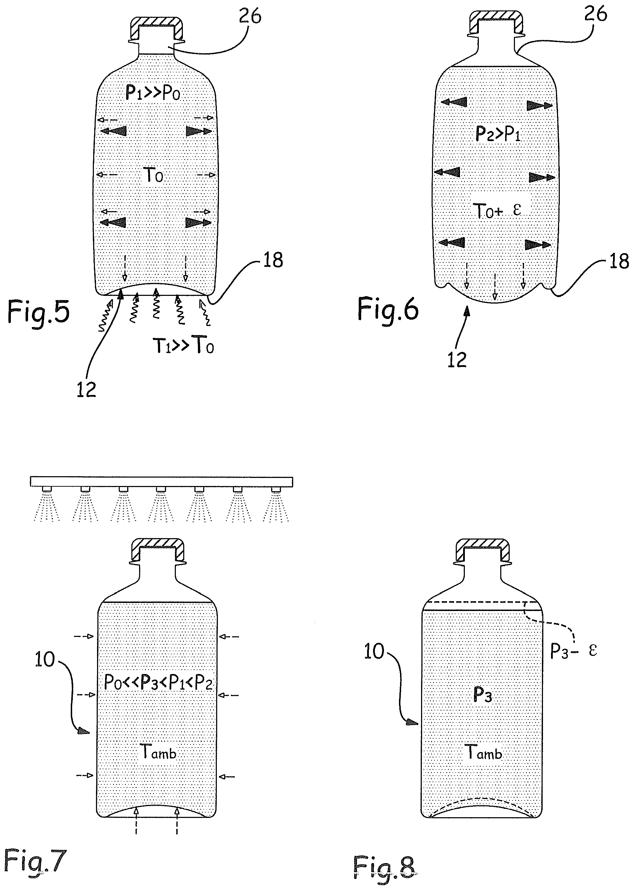

Dès lors, si l'apport d'énergie qui provoque une montée brutale en température, est focalisé sur la zone 12 de déformation, alors que le contenant ainsi que le liquide qui y est contenu sont encore chauds, cet apport provoque un relâchement localisé des contraintes très important, une rétraction très importante localisée au droit de la zone 12 de déformation et donc une très forte mise en pression de l'intérieur du contenant, la pression étant P₁et le volume V₁, la température étant T₀ plus εseulement du fait d'une très faible conduction de la chaleur au liquide qui n'a pas le temps d'homogénéiser la température par convection. P₁ est très supérieure à la pression initiale atmosphérique P₀et le volume V₁ est très inférieur à V₀. L'air contenu dans l'espace 26 de tête absorbe cette montée en pression, se comprime sous la montée en pression et on constate que le volume de l'espace 26 de tête est fortement diminué sur la figure 5.

Le corps du contenant se galbe très légèrement sous l'effet de la pression, pour un contenant de section cylindrique tel que celui qui a été choisi pour sa simplicité pédagogique. Par contre, il n'y a pas de relâchement supplémentaire de contraintes de la paroi du contenant en dehors de la zone 12 de déformation car ledit relâchement est bloqué par la forte montée en pression.

De façon préférentielle, l'apport d'énergie est délivré immédiatement après le bouchage.

Etape 6 : le contenant est sous forte pression et atteint la pression P₂ supérieure à P₁. On note que la zone 12 de déformation, sous cette pression peut atteindre une forte déformation et prend, dans le cas présent, une forme très fortement convexe à partir de sa forme concave initiale. La zone 12 de déformation est convexe comme montré sur la figure 6 car sous l'effet de la pression interne, la zone 12 de déformation tend à prendre un profil stable, le plus stable connu étant la sphère.

Etape 7 : le contenant est refroidi pour le ramener à la température ambiante T_{amb}. Le liquide contenu se contracte et le volume de tête diminue, ce qui provoque le retour de la zone de déformation, qui se trouve de nouveau sollicitée, à une forme concave.

Le contenant se stabilise à un volume V₂très inférieur à V₀et inférieur à V₁ et à une pression P₃ inférieure à P₁ et donc à P₂ mais encore supérieure ou égale à P₀ grâce à la membrane qui a compensé la baisse de pression.

Au final, le volume de l'espace de tête augmente très faiblement puisque la pression diminue peu, comme montré sur la figure 7 correspondante.

On constate surtout que la dépression liée à la très forte baisse de température, est compensée par la zone 18 déformable qui reprend une forme concave, jouant un rôle de "membrane".

Etape 8 : le contenant et son contenu ont été stockés sur une durée suffisante, l'air de l'espace de tête a été partiellement absorbé mais la zone 12 de déformation a la possibilité de compenser cette absorption sans que la pression interne diminue de façon trop importante, le volume étant V₃ inférieur à V₂du fait de la compensation par la zone de déformation. La pression P₃est inférieure à P₂ mais toujours supérieure ou égale à P₀, voir figure 8.

On note que le contenant a sa forme finale définitive. Seule la zone 12 de déformation a été modifiée sans incidence sur le profil général extérieur visible puisque ce profil ne peut plus se déformer, étant en dessous de la température de figeage.

Sur cette même figure, il a été indiqué en trait mixte les éventuelles évolutions dans le temps du contenant et de son contenu.

Ainsi, si le contenant venait de plus à être placé dans un endroit froid par exemple ou si la dissolution des gaz de l'air de l'espace de tête venait à s'effectuer durant un stockage prolongé, le contenant conserverait sa forme générale tant sur le corps que sur le goulot et donc l'aspect esthétique serait préservé sans aucun phénomène de collapse déformant, seule la zone de déformation venant compenser.

Il convient nécessairement dans le procédé selon la présente invention de déterminer les caractéristiques de la zone de déformation de façon adaptée en fonction du volume dudit contenant notamment et des températures d'emplissage.

Ainsi le procédé de traitement thermique d'un contenant destiné à être empli à chaud, pour un stockage long, selon la présente invention se caractérise en ce qu'il comprend les étapes suivantes :
- Réalisation d'un contenant 10 à paroi mince à partir d'une préforme, par un procédé engendrant des contraintes résiduelles, ledit contenant étant destiné à recevoir des moyens d'obturation 20,
- Réalisation dans ce contenant d'une zone 12,120 de déformation,
- Emplir le contenant 10 à chaud, à une température supérieure à 70°C, avec un produit agroalimentaire,
- Fermer ledit contenant empli,
- Effectuer un apport d'énergie sur la zone 12 de déformation du contenant encore chaud, pour provoquer une libération des contraintes dans cette zone 12 de déformation et une réduction de volume correspondante,
- Cesser cet apport d'énergie,
- Refroidir le contenant 10.

On a représenté sur les figures non encore décrites 9-12, les évolutions possibles d'une zone 120 de déformation à amplification de rétraction permettant de mettre en oeuvre également ce procédé selon la présente invention.

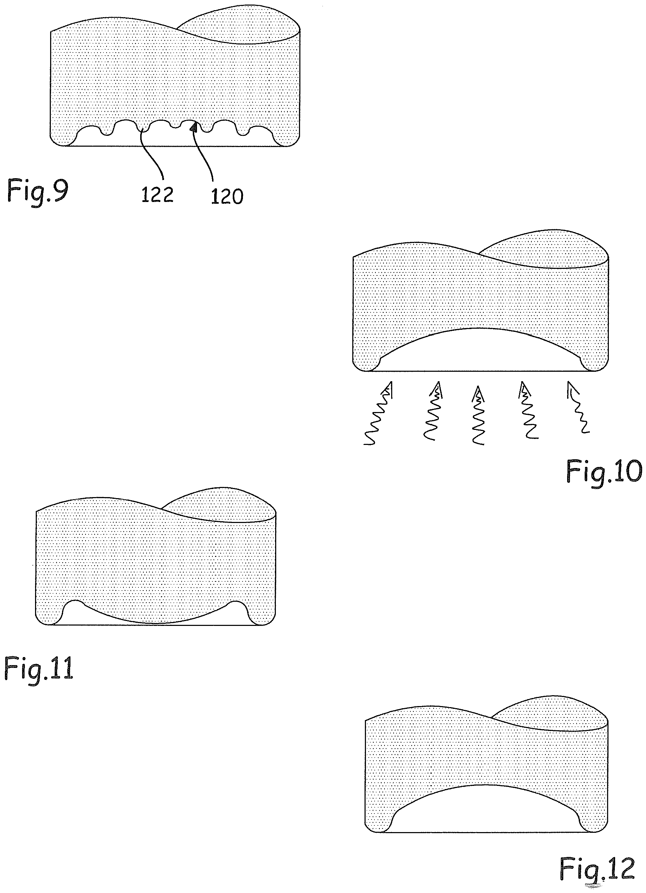

Cette zone 120 de déformation est toujours localisée dans le fond de la bouteille et de forme concave. Cette zone 120 de déformation comporte, selon un mode de réalisation préférentiel, des nervures 122 déployables. Comme montré sur la figure 9, le contenant selon la présente invention pour la mise en oeuvre du procédé comprend plusieurs nervures concentriques, qui pourraient aussi être en escalier ou en spirale, ces réalisations étant de simples modes de réalisation, totalement équivalents.

Aussi, lors de l'étape 5, cette zone 120 de déformation, qui subit un apport brutal de d'énergie voit les nervures se déployer et les nervures 122 disparaissent car la matière qui constitue la zone 120 de déformation se rétracte et se tend à la façon d'une membrane, ceci est visible sur la figure 10. Ceci amplifie le phénomène de rétraction et surtout conduit à une diminution du volume donc à une augmentation de la pression d'autant plus importante.

Lorsque la pression augmente, la zone de déformation peut prendre une forme concave pour compenser cette forte augmentation de pression comme représenté sur la figure 11.

A l'inverse, lors du refroidissement, c'est la zone de déformation qui reprend sa forme convexe, comme représenté sur la figure 12.

Ainsi le procédé permet d'utiliser des contenants destinés initialement à du remplissage à froid, donc intégrant une très faible quantité de matière pour du remplissage à chaud avec tous ses avantages, notamment de garantie sanitaire.

De plus, on constate que le procédé selon l'invention nécessite un très faible coût énergétique puisqu'il ne s'agit seulement que d'un sur-apport d'énergie.

Surtout, ce sur-apport d'énergie est réalisé en un temps extrêmement bref, localisé, si bien que l'opération peut être réalisée au défilement, en sortie de remplissage, sans nécessiter un carrousel spécifique de grandes dimensions, sans nécessiter de reprise, les bouteilles restant stables quelles que soient les étapes concernées.

On comprend que lorsque les contenants de l'art antérieur sont refroidis à l'eau, il sont donc mouillés extérieurement et doivent subir, dès la sortie du refroidissement, un réchauffement qui nécessite un poste spécifique. Il faut éliminer l'eau sur la surface extérieure, ce qui consomme de l'énergie, il faut assurer une temporisation pour assurer les cadences importantes et donc prévoir un carrousel spécifique, si bien que cette étape se trouve vite rendue complexe.

Le procédé selon la présente est par contre très industriel et économique pour le fabricant embouteilleur mais aussi pour le consommateur sur le prix d'achat du produit final et sur la garantie d'asepsie. Il est également très avantageux pour l'environnement du fait de la plus faible quantité de matière à recycler en fin de vie.

Le contenant exposé est une bouteille mais tout autre contenant y compris des pots avec couvercle comme ceux utilisés pour les aliments pour bébés peuvent faire l'objet d'un traitement par le procédé selon la présente invention.

De même, la zone de déformation peut être multiple, répartie en plusieurs endroits du contenant. Dans le cas du fond la forme importe peu car il pourrait être prévu plat avec des nervures ou faiblement convexe, ces formes de zone de déformation étant toutes équivalentes, à condition de permettre un rétreint localisé important.

## Revendications

1. Procédé de traitement thermique d'un contenant destiné à être empli à chaud, pour un stockage long, **caractérisé en ce qu'**il comprend les étapes suivantes :
- Réalisation d'un contenant (10) à paroi mince à partir d'une préforme, par un procédé engendrant des contraintes résiduelles, ledit contenant étant destiné à recevoir des moyens d'obturation (20),
- Réalisation dans ce contenant d'une zone (12,120) de déformation,
- Emplir le contenant (10) à chaud, à une température supérieure à 70°C, avec un produit agroalimentaire,
- Fermer ledit contenant empli,
- Effectuer un apport d'énergie sur la zone (12) de déformation du contenant encore chaud, pour provoquer une libération des contraintes,
- Cesser cet apport d'énergie,
- Refroidir le contenant (10).

2. Procédé de traitement thermique d'un contenant destiné à être empli à chaud, pour un stockage long, selon la revendication 1, **caractérisé en ce que** l'apport d'énergie est réalisé immédiatement après emplissage.

3. Procédé de traitement thermique d'un contenant destiné à être empli à chaud, pour un stockage long, selon la revendication 1 ou 2, **caractérisé en ce que** l'on réalise une zone (120) de déformation à amplification de rétraction.

4. Procédé de traitement thermique d'un contenant destiné à être empli à chaud, pour un stockage long, selon la revendication 1, 2 ou 3, **caractérisé en ce que** l'on réalise le contenant (10) par un procédé d'extrusion/soufflage d'une préforme.

5. Procédé de traitement thermique d'un contenant destiné à être empli à chaud, pour un stockage long, selon l'une quelconque des revendications précédentes, **caractérisé en ce que** l'on dispose la zone (12) de déformation dans le fond (18) du contenant (10).

6. Procédé de traitement thermique d'un contenant destiné à être empli à chaud, pour un stockage long, selon l'une quelconque des revendications précédentes, **caractérisé en ce que** l'on effectue l'apport d'énergie par proximité d'un patin chaud.

7. Procédé de traitement thermique d'un contenant destiné à être empli à chaud, pour un stockage long, selon l'une quelconque des revendications 1 à 5, **caractérisé en ce que** l'on effectue l'apport d'énergie par un flux d'air chaud.

8. Procédé de traitement thermique d'un contenant destiné à être empli à chaud, pour un stockage long, selon l'une quelconque des revendications précédentes, **caractérisé en ce que** l'on génère un espace (26) de tête au remplissage.

9. Procédé de traitement thermique d'un contenant destiné à être empli à chaud, pour un stockage long, selon l'une quelconque des revendications précédentes, **caractérisé en ce que** l'on assure le refroidissement par aspersion d'eau.

10. Contenant pour la mise en oeuvre du procédé selon l'une quelconque des revendications précédentes, **caractérisé en ce que** la zone (12,120) de déformation est de forme concave.

11. Contenant pour la mise en oeuvre du procédé selon la revendication 10, **caractérisé en ce que** la zone (120) de déformation amplifiée comporte des nervures (122) déployables.
